(19) Europäisches Patentamt
European Patent Office
Office européen des brevets

(11) Numéro de publication: 0 094 861
A1

(12) **DEMANDE DE BREVET EUROPEEN**

(21) Numéro de dépôt: 83400882.3

(22) Date de dépôt: 03.05.83

(51) Int. Cl.³: C 08 G 71/04

(30) Priorité: 14.05.82 FR 8208410

(43) Date de publication de la demande: 23.11.83 Bulletin 83/47

(84) Etats contractants désignés: BE CH DE FR GB IT LI NL

(71) Demandeur: P C U K PRODUITS CHIMIQUES UGINE KUHLMANN
Service Propriété Industrielle Tour Manhattan
F-92087 Paris La Défense 2 Cédex 21(FR)

(72) Inventeur: Kervennal, Jacques
134, rue Docteur Locard
F-69005 Lyon(FR)

(72) Inventeur: Cognion, Jean-Marie
85, route de Charly
F-69230 Saint Genis Laval(FR)

(74) Mandataire: Foiret, Claude et al,
P C U K Produits Chimiques Ugine Kuhlmann Service
Propriété Industrielle Tour Manhattan - Cedex 21
F-92087 Paris la Défense 2(FR)

(54) **Procédé de fabrication de polyuréthannes par carbonylation de dérivés hydroxy-aromatiques nitrés.**

(57) Procédé de fabrication de polyuréthannes par réaction directe caractérisé en ce qu'on fait réagir en présence d'un catalyseur du monoxyde de carbone sur un dérivé hydroxy-aromatique nitré de formule:

$$HO - Ar - NO_2$$

Ar représentant le radical aromatique

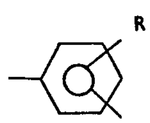

les fonctions nitrée et hydroxylée étant en positions para ou méta l'une par rapport à l'autre et R représentant des atomes d'hydrogène ou d'halogènes, ou encore un groupement alkyle contenant de 1 à 10 atomes de carbone.

EP 0 094 861 A1

Croydon Printing Company Ltd.

Procédé de fabrication de polyuréthannes par carbonylation de dérivés hydroxy-aromatiques nitrés

L'invention concerne un procédé de fabrication de polyuréthannes par réaction en phase liquide des dérivés para ou méta hydroxy-aromatiques nitrés avec le monoxyde de carbone en présence de catalyseur à base, en général, d'un métal noble du groupe VIII, avec éventuellement un deuxième métal de transition choisi parmi les groupes $V_b$, $VI_b$ ou VIII de la classification périodique. Les bases hétéroaromatiques telles que la pyridine, par exemple, agissent favorablement sur la cinétique de la réaction.

Les polyuréthannes sont des polymères habituellement préparés par réaction de condensation de diisocyanates ou polyisocyanates avec des polyols. Le domaine d'application est extrêmement vaste du fait des différences de structure et de texture qu'il est possible d'obtenir, permettant une large gamme des produits allant des mousses souples aux élastomères rigides. La synthèse classique des isocyanates à partir des structures hydrocarbonées fait appel à trois étapes réactionnelles : nitration, hydrogénation et phosgénation.

Cela nécessite de disposer d'appareillages distincts pour chaque étape, de purifier généralement par distillation la diamine puis le diisocyanate, de synthétiser et de manipuler le phosgène, produit dangereux qui entraîne de plus la sous-production d'acide chlorhydrique qu'il faut, soit utiliser dans d'autres réactions, soit électrolyser afin de récupérer le chlore et l'hydrogène, d'où l'entretien coûteux d'un atelier d'électrolyse.

La présente invention permet de réaliser d'une façon nouvelle, en une étape, une structure polyuréthanne en utilisant uniquement du monoxyde de carbone et des molécules aromatiques mono nitrées, substituées par une fonction hydroxylée en fonction para ou méta. On opère à chaud en phase liquide sous pression, en présence de système catalytique.

Dans ces conditions, la réaction du monoxyde de carbone sur le composé para ou méta hydroxy-nitroaromatique peut s'écrire :

$$n(HO - Ar - NO_2) + 3n\,CO \xrightarrow[cata]{} \left[ O - Ar - NH - \underset{O}{C} \right]_n + 2nCO_2$$

Un type de polyuréthanne répondant à cette formule a été synthétisé d'après la littérature selon différentes méthodes ; il s'agit du poly(oxycarbonylimino-1,4 phénylène) :

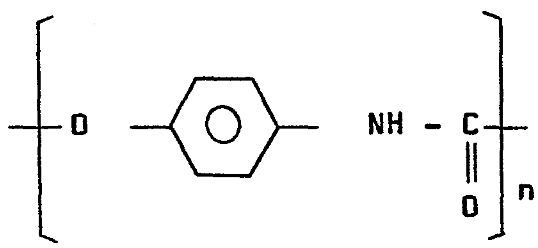

Ce polymère a été préparé pour la première fois par STOERMER en 1909, selon la description faite dans Ber., 43, 3133 (1909), par décomposition thermique du para-hydroxybenzoylazide :

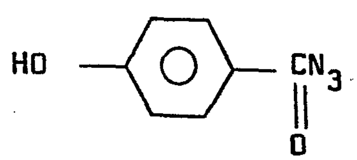

ILLARI et coll. ont publié dans Ann. Chim. 43, 679 (1953) une autre synthèse du même polymère par décomposition thermique de la N-parahydroxyphényl N'-phénylurée :

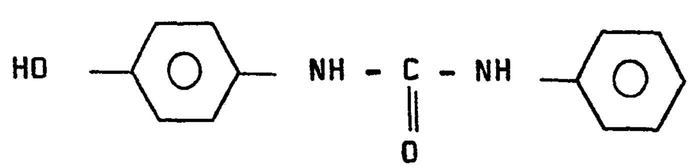

Plus récemment, J.F. KINSTLE et L.E. SEPULVEDA, dans le J. Polymer Sci. Polymer Lett. ëd. 15, 467, (1977) ont mis en évidence les propriétés originales de sublimation de ce polymère et le brevet japonais 56.103222 en décrit une synthèse par chauffage du parahydroxycarbamate préparé par réaction du para-aminophénol sur un chloroformiate. Dans tous les cas, les produits de départ sont coûteux et les rendements obtenus faibles, ce qui a empêché tout développement industriel de ce polyuréthanne.

La présente invention décrit la synthèse directe, avec d'excellents rendements, de polyuréthannes répondant à la formule générale présentée ci-dessus, à partir de dérivés para ou méta hydroxy aromatiques nitrés, peu coûteux et facilement accessibles. La réaction de carbonylation exige la présence d'un système catalytique. La demanderesse a découvert que des catalyseurs contenant un métal noble du groupe VIII de la classification périodique, préférentiellement choisi parmi le palladium, platine ou rhodium et introduit sous forme habituelle aux catalyseurs métalliques telle que : métal, oxyde ou halogénure, s'avéraient particulièrement actifs. Ils peuvent éventuellement être associés à une base hétéroaromatique telle que la pyridine. On peut avantageusement ajouter un deuxième métal de transition, choisi parmi les groupes $V_b$, $VI_b$ ou VIII de la classification périodique, tels que le molybdène, le vanadium, le fer et autres et introduit sous la forme habituelle telle que : métal ou oxyde. Le métal noble peut aussi être déposé sur un support, éventuellement en association avec le deuxième métal, ce qui favorise leur récupération et leur recyclage.

Comme exemples d'halogénures de métal noble utilisables dans la réaction, on peut citer les chlorures, bromures, iodures de palladium, rhodium, ruthénium, osmium, iridium et platine. Dans le cas où est ajouté un deuxième métal de transition, on préfère utiliser un oxyde tel que : le trioxyde de molybdène, l'oxyde ferrique et le trioxyde de vanadium.

Comme autre illustration de catalyseurs selon l'invention, les métaux peuvent être déposés sur différents supports, à partir de divers composés minéraux ou organométalliques, selon des techniques connues d'imprégnation, pour conduire, après un traitement approprié, aux catalyseurs revendiqués. Parmi les précurseurs métalliques qui peuvent alors être utilisés, on trouve les acétates, nitrates, halogénures ou complexes organo-métalliques de métaux nobles, les acétates, nitrates, halogénures, oxalates, et autres, des autres éventuels métaux de transition, mais aussi des sels mixtes, tels que, par exemple, le molybdate d'ammonium, ou encore des complexes moléculaires hétéropolymétalliques associant directement le métal noble au deuxième métal de transition. Le support imprégné est, après séchage, porté à, au moins, 300°C sous azote, à l'aide d'une programmation linéaire de température, à raison de 2°C/mn afin de décomposer les précurseurs en cristallites métalliques ou oxydes actifs dans la réaction étudiée. Les supports pouvant ainsi être utilisés sont divers ; d'une façon non limitative, on peut citer les alumines, silices, silice-alumines, la magnésie, les charbons actifs, les carbures de silicium, etc. L'imprégnation peut être menée de façon à conduire à des teneurs en métal noble sur le support de 0,1 à 20 % en poids et préférentiellement entre 1 et 15.

Le procédé selon l'invention est applicable aux molécules d'hydroxy-nitro-aromatiques de formule générale :

$$HO - Ar - NO_2$$

où Ar est un radical aromatique représentant :

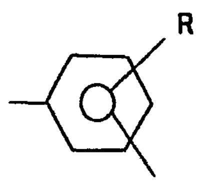

(II)

les fonctions nitrée et hydroxylée étant en positions para ou méta l'une par rapport à l'autre. Le substituant R pouvant être : des atomes d'hydrogène, d'halogènes, un radical alkyle contenant de 1 à 10 atomes de carbone.

La concentration du catalyseur dans le milieu réactionnel, exprimée par le rapport du nombre d'atomes-grammes du métal noble sur le nombre de groupements nitrés à transformer peut varier entre $10^{-4}$ et 1 et préférentiellement entre $5.10^{-3}$ et $10^{-3}$. Le rapport du nombre d'atomes-grammes du deuxième métal éventuellement présent par rapport à celui du métal noble peut varier entre $10^{-2}$ et $10^{2}$ et de préférence entre 0,1 et 10.

La base hétéroaromatique telle que la pyridine, la bipyridine, la quinoléine, lorsqu'elle est utilisée est additionnée au milieu réactionnel dans des quantités allant de $10^{-3}$ à 30 moles par mole de dérivé nitré et préférentiellement de $10^{-2}$ à 10 moles par mole, ceci en vue d'améliorer l'activité et la sélectivité du catalyseur.

On opère en général en présence d'un solvant qui peut être un hydrocarbure saturé ou aromatique tel que l'hexane, l'heptane, le n-décane, la décaline, le benzène, le toluène ou le xylène ; des halogénures aromatiques tels que le chlorobenzène et les dichlorobenzènes. La quantité de solvant n'est pas critique, mais on travaille en général avec des solutions contenant de 5 à 50 % en poids du dérivé nitré. Les polymères formés sont insolubles dans ces solvants, mais peuvent être soit solubilisés dans le diméthylsulfoxyde ou l'hexaméthylphosphortriamide, soit sublimés ; c'est le cas, comme l'expliquent J. F. KINSTLE et L. E. SEPULVEDA dans le J. Polymer Sci., Polymer Lett. ed. 15, 467 (1977), du poly(oxycarbonylimino-1,4 phénylène) qui se décompose thermiquement en parahydroxyphénylisocyanate monomère gazeux, stable, qui se sublime et se repolymérise immédiatement dès qu'il se condense sur la paroi froide du sublimateur. De ce fait, ces polymères peuvent être déposés sur des surfaces, éventuellement poreuses,

et présentent un intérêt potentiel pour les revêtements.

La réaction selon l'invention des dérivés hydroxy-aromatiques nitrés avec le monoxyde de carbone peut également s'effectuer en présence d'un alcool monofonctionnel. Cet alcool peut être aliphatique ou aromatique, les alcools les plus usuels étant le méthanol, l'éthanol, le phénol. Selon la quantité d'alcool mis en oeuvre, il y a, par rupture dans la formation des enchaînements polyuréthannes plus ou moins de fonctions carbamates créées. Avec un excès d'alcool, on peut isoler non plus le polyuréthanne, mais le monomère correspondant sous forme de carbamate de formule :

NO - Ar - NHCOOR

Ar étant le radical aromatique tel que précédemment défini.

On peut décomposer les carbamates en les chauffant entre 150 et 250°C et l'élimination de l'alcool libéré, éventuellement favorisée en opérant sous pression réduite et en utilisant un catalyseur tel que le chlorure de zinc, le chlorure de fer, permet de récupérer le polymère polyuréthanne.

De même, la présence d'une amine primaire ou secondaire ou d'eau crée des fonctions urées.

Les températures de réaction sont comprises entre 100 et 500°C et plus particulièrement entre 150°C et 250°C.

Les pressions sont comprises entre 20 et 500 bars, de préférence entre 100 et 350 bars.

Les essais décrits dans les exemples ci-dessous ont été réalisés en discontinu dans un autoclave en Hastelloy C de 500 ml, muni d'un dispositif d'agitation magnétique. L'autoclave, chargé avec le dérivé hydroxynitroaromatique, le solvant, le catalyseur et la base hétéroaromatique, est ensuite balayé à l'azote avant d'être mis sous pression de

monoxyde de carbone à température ordinaire ; on le chauffe à la température choisie et l'avancement de la réaction est contrôlé par l'enregistrement de la pression.

Les analyses ont été effectuées par résonance magnétique nucléaire et par chromatographie d'exclusion par taille (perméation de gel) en utilisant une colonne SHODEX A 802, ce qui permet d'avoir une bonne image de la répartition des produits et de la distribution de masses des polymères formés. Les micro-analyses élémentaires ont été faites sur les produits purifiés.

Les exemples ci-dessous sont donnés à titre d'illustration non limitative de l'invention.

<u>EXEMPLE 1</u>

On place dans l'autoclave 10 g de paranitrophénol (0,0719 mole) et 13,5 g de phénol (0,144 mole), correspondant à un rapport molaire $\frac{\text{phénol}}{\text{dérivé nitré}}$ de 2. On ajoute 0,42 g de chlorure de palladium, 0,35 g de trioxyde de molybdène, 0,35 g de pyridine et complète le volume total à 100 ml avec de l'orthodichlorobenzène. On balaie le réacteur avec de l'azote puis introduit du monoxyde de carbone comprimé à 200 bars ; on isole l'autoclave et le chauffe, sous agitation, à 200°C pendant 35 minutes puis refroidit. On recueille le produit brut de réaction, rince le réacteur à l'acétone et filtre l'ensemble. On récupère ainsi 6,7 g d'un précipité gris et un filtrat qui, concentré à sec, donne 7,3 g de résidu.

Le précipité est soluble dans le diméthylsulfoxyde et présente en R.M.N. du proton un système aromatique AA'BB' caractéristique d'une para-disubstitution. Le spectre en chromatographie par perméation de gel met en évidence un seul pic large caractéristique d'une structure polymère centrée sur une masse d'environ 1 250 et atteignant des masses supérieures à 3 500.

La micro-analyse, effectuée sur un échantillon sublimé de ce précipité est caractéristique du polymère polyuréthanne :

calculé : C = 62,22 % ; H = 3,70 % ; N = 10,37 %
trouvé : C = 62,15 % ; H = 3,86 % ; N = 10,30 %

Le résidu du filtrat, analysé par chromatographie par perméation de gel et spectrométrie de masse, montre qu'il s'agit d'un mélange de différents polymères et de carbamate de phényle.

EXEMPLE 2

On introduit dans l'autoclave 10 g de paranitrophénol (0,0719 mole) et 6,6 g d'éthanol (0,143 mole). Le rapport molaire $\frac{\text{éthanol}}{\text{paranitrophénol}}$ est de 2. On ajoute le système catalytique, constitué de 0,42 g de chlorure de palladium, de 0,35 g de trioxyde de molybdène, additionné de 0,35 g de pyridine. On complète à 100 ml le volume total à l'aide d'orthodichlorobenzène, et en opérant comme dans l'exemple 1, on introduit 200 bars de monoxyde de carbone et chauffe à 200°C pendant 10 minutes. On laisse refroidir et récupère le mélange réactionnel en rinçant le réacteur avec de l'acétone. Après filtration et lavage à l'acétone, on évapore à sec le filtrat et recueille 13 g d'un résidu solide gris de point de fusion 114°C dont le pic parent en spectrométrie de masse est à $\frac{m}{e}$ = 181. L'analyse structurale par résonance magnétique nucléaire du proton dans $CD\,Cl_3$ à 60 MHz conduit au parahydroxycarbamate d'éthyle ainsi obtenu avec un rendement de 100 % :

δ $CH_3$ = 1,15 ppm ; δ $CH_2$ = 4,07 ppm ; structure aromatique para-disubstituée conduisant à un système de type AA'BB' centré à 6,8 et 7,2 ppm.

Après recristallisation de l'eau chaude, on récupère des

paillettes blanches sur lesquelles est effectuée la micro-analyse :

théorique : C = 59,67 % ; H = 6,08 % ; N = 7,73 %
trouvé : C = 59,63 % ; H = 6,01 % ; N = 7,44 %

Un traitement thermique à 220°C permet de décomposer le carbamate et de récupérer le polymère polyuréthanne de structure analogue à celui obtenu dans l'exemple 1.

EXEMPLE 3

L'autoclave est chargé avec 10 g de paranitrophénol, 0,42 g de chlorure de palladium, 0,35 g de trioxyde de molybdène, 0,35 g de pyridine et 100 ml d'orthodichlorobenzène. En opérant comme dans l'exemple 1, on introduit 200 bars de monoxyde de carbone dans le réacteur puis chauffe à 200°C pendant 1 heure avant de refroidir. On récupère le mélange réactionnel brut, rince à l'acétone et filtre l'ensemble. On recueille 8,5 g de précipité insoluble gris-foncé et un filtrat qui, concentré à sec, donne 2,3 g de produit brun. Le précipité est solubilisé dans du diméthylsulfoxyde, filtré et analysé par R.M.N. et chromatographie par perméation de gel. Ceci montre qu'il s'agit d'un polymère de type polyuréthanne identique à celui du précipité obtenu dans l'exemple 1, la micro-analyse étant en accord avec cette structure.

EXEMPLE 4

On introduit dans le réacteur 10 g de paranitrophénol, 0,42 g de chlorure de palladium, 0,35 g de pyridine et 100 ml d'orthodichlorobenzène. On opère comme précédemment à 200°C, après avoir introduit 200 bars de monoxyde de carbone à 20°C. Après 3 heures de réaction, on laisse refroidir. On recueille le mélange brut de réaction, rince l'autoclave avec de l'acétone, puis filtre l'ensemble. On récupère ainsi 7,6 g de précipité insoluble se présentant sous forme d'une poudre grise ; le filtrat, après concentration à sec, conduit à 3,1 g de produit

foncé d'aspect légèrement pâteux. Le précipité est identifié, en chromatographie par perméation de gel, comme étant un polymère de type polyuréthanne de même nature que ceux décrits dans les exemples 1 et 3.

EXEMPLE 5

On place dans un ballon à solides monté sur un évaporateur rotatif, 10 g d'un support d'alumine pure commercialisée par CONDEA CHEMIE, de surface spécifique 250 m2/g et tamisée entre 200 et 600 ppm. On asperge en continu le support avec 70 ml d'une solution aqueuse de 0,920 g de molybdate d'ammonium et 1,05 g d'acétate de palladium tout en chauffant le ballon à 120°C sous pression réduite de 20 mm de mercure, de façon à ce que l'eau distille au fur et à mesure de l'imprégnation. L'introduction dure 2 heures, puis on cuit le support imprégné à 300°C, sous courant d'azote, en utilisant une programmation linéaire de température de 2°C par minute. Après 16 heures de palier à 300°C, on introduit un courant d'hydrogène pendant une demi-heure et laisse refroidir en balayant à l'azote. Le catalyseur obtenu contient, d'après l'analyse, 4,7 % de palladium et 4,2 % de molybdène.

On introduit dans l'autoclave 10 g de paranitrophénol (0,0719 mole) et 0,825 g d'éthanol (0,018 mole), ce qui correspond à un rapport molaire $\frac{\text{éthanol}}{\text{dérivé nitré}}$ de 0,25. On ajoute 1 g de pyridine, 1,63 g de catalyseur mixte Pd-Mo préparé ci-dessus et complète le volume total à 100 ml à l'aide d'orthodichlorobenzène. On opère comme précédemment à 200°C sous 200 bars de monoxyde de carbone à 20°C. On récupère le mélange réactionnel et rince le réacteur à l'acétone, puis on filtre l'ensemble. On récupère 4,1 g d'un précipité noir qui contient le catalyseur et le polymère polyuréthanne. Le filtrat, après concentration à sec, conduit à 8,3 g d'un solide noir dont l'analyse par chromatographie par perméation de gel montre qu'il s'agit essentiellement du parahydroxycarbamate d'éthyle.

EXEMPLE 6

On place dans l'autoclave 10 g de métanitrophénol (0,0719 mole), 0,42 g de chlorure de palladium, 0,35 g de trioxyde de molybdène, 0,35 g de pyridine et complète à 100 ml le volume total à l'aide d'orthodichlorobenzène. En opérant comme dans l'exemple 1, on introduit 200 bars de monoxyde de carbone et chauffe à 200°C pendant 30 minutes, puis refroidit. On recueille le mélange réactionnel brut, rince le réacteur à l'acétone et filtre l'ensemble. Le filtrat, concentré à sec, donne 8,2 g de résidu gris foncé dont l'analyse en chromatographie par perméation de gel met en évidence une structure polymère atteignant des masses supérieures à 4 000. Ce précipité peut être sublimé ce qui conduit à un produit jaune pâle, huileux, qui se solidifie ensuite et dont l'analyse élémentaire correspond à la structure polyuréthanne.

EXEMPLE 7

On introduit dans le réacteur 10 g de paranitrophénol, 0,42 g de chlorure de palladium, 0,35 g de trioxyde de molybdène, 0,35 g de pyridine et complète à 100 ml le volume total avec de l'orthodichlorobenzène. En opérant comme dans l'exemple 1, on introduit 180 bars de monoxyde de carbone et chauffe à 170°C pendant 3 heures, puis refroidit. Après récupération du mélange réactionnel, lavagè à l'acétone puis filtration, on récupère 8,2 g de précipité insoluble qui a la structure du polymère polyuréthanne.

Revendications de brevet

1 - Procédé de fabrication de polyuréthannes par réaction directe caractérisé en ce qu'on fait réagir en présence d'un catalyseur du monoxyde de carbone sur un dérivé hydroxy-aromatique nitré de formule :

$$HO - Ar - NO_2$$

Ar représentant le radical aromatique

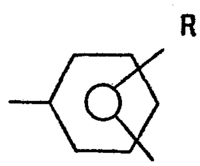

les fonctions nitrée et hydroxylée étant en positions para ou méta l'une par rapport à l'autre et R représentant des atomes d'hydrogène ou d'halogènes, ou encore un groupement alkyle contenant de 1 à 10 atomes de carbone.

2 - Procédé selon la revendication 1 caractérisé en ce que le catalyseur est à base d'un métal noble du groupe VIII de la classification périodique.

3 - Procédé selon l'une des revendications 1 à 2 caractérisé en ce que le catalyseur est à base de deux métaux, dont l'un de transition est choisi parmi les métaux des groupes $V_b$, $VI_b$ et VIII de la classification périodique.

4 - Procédé selon l'une des revendications 1 à 3 caractérisé en ce que la réaction s'effectue en présence d'une base hétéroaromatique.

5 - Procédé selon l'une des revendications 1 à 4 caractérisé en ce que la réaction s'effectue sous une pression de 20 à 500 bars.

6 - Procédé selon l'une des revendications 1 à 5 caractérisé en ce que la réaction s'effectue en phase liquide à une température comprise entre 100 et 500°C.

7 - Procédé selon l'une des revendications 1 à 6 caractérisé en ce que la réaction s'effectue en présence d'un alcool monofonctionnel.

8 - Procédé selon la revendication 7 caractérisé en ce que le produit de réaction est chauffé à une température comprise entre 150 et 250°C.

9 - Procédé selon l'une des revendications 1 à 8 caractérisé en ce que le dérivé hydroxyaromatique nitré est le paranitrophénol.

10 - Procédé selon l'une des revendications 1 à 8 caractérisé en ce que le dérivé hydroxyaromatique nitré est le méta-nitrophénol.

0094861

Office européen des brevets

# RAPPORT DE RECHERCHE EUROPEENNE

Numéro de la demande

EP 83 40 0882

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-1 080 094 (I.C.I.) * Pages 4,5, revendications 1,8-10,13,14,20; page 3, lignes 6-24, 64-75, 113-127 * | 1-10 | C 08 G 71/04 |
| | ----- | | |
| | | | DOMAINES TECHNIQUES RECHERCHES (Int. Cl. ³) |
| | | | C 08 G |

Le présent rapport de recherche a été établi pour toutes les revendications

| Lieu de la recherche | Date d'achèvement de la recherche | Examinateur |
|---|---|---|
| LA HAYE | 27-07-1983 | VAN PUYMBROECK M.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503. 03.82